# EUROPÄISCHE PATENTSCHRIFT

(11) **EP 1 436 173 B1**
(45) Veröffentlichungstag und Bekanntmachung des Hinweises auf die Patenterteilung: **11.05.2005**
(21) Anmeldenummer: 02776830.8
(22) Anmeldetag: 16.10.2002
(51) Int. Cl.: B60R 21/01, H04N 13/00

(54) **SYSTEM UND VERFAHREN ZUM ERFASSEN DER SITZBELEGUNG EINES KRAFTFAHRZEUGES**
SYSTEM AND METHOD FOR DETECTING VEHICLE SEAT OCCUPANCY
SYSTEME ET PROCEDE POUR SAISIR LE NOMBRE D'OCCUPANTS D'UN VEHICULE

(30) Priorität: 18.10.2001 DE 10151417
(43) Veröffentlichungstag der Anmeldung: 14.07.2004
(73) Patentinhaber: SIEMENS AKTIENGESELLSCHAFT, 80333 München (DE)
(72) Erfinder: WAGNER, Ulrich, 93055 Regensburg (DE); KÖHLER, Thorsten, 93180 Deuerling (DE)
(86) Internationale Anmeldenummer: PCT/DE2002/003922
(87) Internationale Veröffentlichungsnummer: WO 2003/035433

(56) Entgegenhaltungen:
- EP-A- 0 885 782
- EP-A- 0 942 610
- EP-A- 1 081 504
- EP-A- 1 087 336

## Beschreibung

Die Erfindung betrifft ein System und ein Verfahren zum Verarbeiten von Bilddaten mit einer ersten Datenverarbeitungseinrichtung zum Verarbeiten von Bilddaten von mindestens zwei Kameras, wobei weiterzuverarbeitende Daten erzeugt werden, und einer zweiten Datenverarbeitungseinrichtung zum Weiterverarbeiten der weiterzuverarbeitenden Daten, wobei die Funktionen der ersten Datenverarbeitungseinrichtung im Wesentlichen auf speziell für die Funktionen konfigurierter Hardware basieren, und die Funktionen der zweiten Datenverarbeitungseinrichtung im Wesentlichen auf speziell für die Funktionen konfigurierter Software basieren.

Gattungsgemäße Systeme und gattungsgemäße Verfahren kommen insbesondere in Kraftfahrzeugen in Verbindung mit Insassenschutzsystemen zum Einsatz wie in z.B. EP 0 942 610 A. Dabei werden zum Beispiel Bilddaten von zwei mit Abstand zueinander angeordneten Kameras in einer Weise verarbeitet, um eine dreidimensionale Bildinformation zu erhalten. Auf der Grundlage dieser Bildinformationen ist es dann beispielsweise möglich, die Belegung der Sitze und insbesondere des Beifahrersitzes zu klassifizieren; auf dieser Grundlage kann dann beispielsweise das Zündverhalten eines Airbags beeinflusst werden. Weitere Anwendungen betreffen beispielsweise die Unterstützung eines Fahrers beim Steuern eines Kraftfahrzeugs, zum Beispiel über eine Spurerkennung.

Die Verarbeitung der Bilddaten ist zumindest teilweise sehr rechenaufwendig. Andererseits ist es erforderlich, hohe Verarbeitungsgeschwindigkeiten zu erreichen, da nur auf diese Weise zuverlässige Bildinformationen erzeugt werden können und da zahlreiche Anwendungen, die im Zusammenhang mit der Fahrsicherheit stehen, sehr zeitkritisch sind.

Um die erwünschten hohen Verarbeitungsgeschwindigkeiten zu erreichen, wurde in einer früheren Patentanmeldung bereits vorgeschlagen, die Bilddatenverarbeitung in Hardware auszubilden. Zu diesem Zweck werden beispielsweise ein FPGA ("Field Programmable Gate Array") beziehungsweise ein ASIC ("Application Specific Integrated Circuit") verwendet. Diese Datenverarbeitungseinrichtungen können durch ein digitales synchrones Logikdesign extrem parallelisiert arbeiten. Auf diese Weise können um Größenordnungen höhere Verarbeitungsgeschwindigkeiten erreicht werden, wobei teilweise mit einem deutlich verringerten Systemtakt gearbeitet werden kann.

Die Hardwarerealisierung der Bilddatenverarbeitung führt somit zwar zu einer deutlichen Verbesserung der Systeme im Hinblick auf die Verarbeitungsgeschwindigkeit und die damit in Verbindung stehenden Problematiken, allerdings geht aufgrund der Hardwareimplementierung Flexibilität verloren. Eine solche ist aber für unterschiedliche Anwendungen beziehungsweise die Anpassung der Systeme an konkrete Umstände ebenfalls eine wichtige Größe im Hinblick auf die Optimierung von Bilddatenverarbeitungssystemen und die damit in Verbindung stehenden Verfahren.

Diesbezüglich offenbart beispielsweise die DE 34 25 946 einen Entfernungsmesser mit einem Paar optischer Sensoranordnungen, bei dem die Funktionen der ersten Datenverarbeitungseinrichtung im Wesentlichen auf speziell für die Funktionen konfigurierter Hardware basieren, und die Funktionen der zweiten Datenverarbeitungseinrichtung im Wesentlichen auf speziell für die Funktionen konfigurierter Software basieren. Allerdings werden in der ersten Datenverarbeitungseinrichtung Werte maximaler Übereinstimmung ermittelt und an die zweite Datenverarbeitung zwecks Weiterverarbeitung weitergereicht, ohne beispielsweise unkritische Spitzenwerte der Bewertungsfunktion, vorzugsweise flexibel, eliminieren zu können, was bei Ausbildung in einer Hardwareschaltung kaum oder nur sehr aufwendig realisierbar und regelmäßig unwirtschaftlich wäre.

Der Erfindung liegt die Aufgabe zugrunde, die Nachteile des Standes der Technik auszuräumen und insbesondere ein System und ein Verfahren zum Verarbeiten von Bilddaten zur Verfügung zu stellen, welche hohe Datenverarbeitungsgeschwindigkeiten bei hoher Flexibilität bieten.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System dadurch auf, dass die Funktionen der ersten Datenverarbeitungseinrichtung das Erzeugen von Korrelationskurven als weiterzuverarbeitende Daten umfassen und dass die Funktionen der zweiten Datenverarbeitungseinrichtung das Auswerten der von der ersten Datenverarbeitungseinrichtung erzeugten Korrelationskurven umfassen. Auf diese Weise ist es möglich, rechenzeitaufwendige Verarbeitungsschritte durch die spezielle Ausbildung einer Hardware zu realisieren, während weniger rechenzeitaufwendige Schritte, bei denen aber ein hohes Maß an Flexibilität erforderlich ist, in einem Prozessor beziehungsweise Controller durchgeführt werden. Das Erzeugen von Korrelationskurven auf der Grundlage von Vergleichsergebnissen zwischen Daten von verschiedenen Kameras ist sehr rechenzeitaufwendig. Im Prinzip kann die Berechnung dieser Korrelationskurven aber bei zahlreichen Systemen identisch erfolgen. Es bietet sich daher an, diese Berechnungen mit einer speziellen Hardware durchzuführen. Im Gegensatz hierzu ist das Weiterverarbeiten der Korrelationskurven, beispielsweise das Suchen von Extremwerten in den Korrelationskurven zum Bereitstellen von Tiefeninformation eines dreidimensionalen Bildes nicht sonderlich rechenzeitaufwendig. Es ist aber besonders erwünscht, an dieser Stelle ausreichend flexibel zu sein, um das System an unterschiedliche Anwendungen anpassen zu können. Dies wird auf der Grundlage der Softwareverarbeitung erreicht.

Das erfindungsgemäße System ist in besonders vorteilhafter Weise dadurch weitergebildet, dass die Funktionen der ersten Datenverarbeitungseinrichtung ein Vorverarbeiten der Bilddaten zu vorverarbeiteten Daten umfassen und dass aus den vorverarbeiteten Daten Korrelationskurven erzeugt werden. Eine solche Vorverarbeitung ist beispielsweise eine rechenzeitaufwendige Censustransformation, wodurch bereits bei der Vorverarbeitung der Vorteil einer hohen Verarbeitungsgeschwindigkeit zum Tragen kommt. Auch die weitere Verarbeitung der vorverarbeiteten Daten zu Korrelationskurven ist rechenzeitaufwendig, so dass auch diese Funktion von der ersten Datenverarbeitungseinrichtung übernommen werden sollte.

Weiterhin kann in vorteilhafter Weise im Rahmen der vorliegenden Erfindung vorgesehen sein, dass die erste Datenverarbeitungseinrichtung Daten von zwei Kameras empfängt, welche zusammen eine Stereokamera bilden, dass die Daten jeder Kamera in mehrere Bildbereiche unterteilt werden und dass die Daten von Bildbereichen der ersten Kamera mit Daten von benachbarten Bildbereichen der zweiten Kamera verglichen werden, wodurch für jeden dem Vergleich unterzogenen Bildbereich der ersten Kamera eine Korrelationskurve erzeugt wird. Geht man beispielsweise davon aus, dass die erste Kamera eine linke Kamera ist, so kann jeder Bildbereich des linken vorverarbeiteten Bildes mit mehreren, beispielsweise 24 direkt danebenliegenden Bildbereichen des rechten vorverarbeiteten Bildes, das heißt des Bildes der zweiten Kamera, verglichen werden. Jeder einzelne Vergleich liefert einen Wert, der die Übereinstimmung der entsprechenden Bildbereiche charakterisiert. Für jeden Bereich des linken Bildes ergeben sich mehrere, das heißt im vorliegenden Beispiel 24, Vergleichsergebnisse. Diese Abfolge von Vergleichsergebnissen dienen als Korrelationskurve beziehungsweise Korrelationsfunktion. Für jeden Bildbereich des linken Bildes ergibt sich folglich eine Korrelationskurve. Bei der beispielhaft beschriebenen Zuordnung der ersten Kamera als linke Kamera und der zweiten Kamera als rechte Kamera wird von einer "Links-Rechts-Korrelation" gesprochen.

Ebenfalls ist es im Rahmen der vorliegenden Erfindung in vorteilhafter Weise möglich, dass die erste Datenverarbeitungseinrichtung Daten von zwei Kameras empfängt, welche zusammen eine Stereokamera bilden, dass die Daten jeder Kamera in mehrere Bildbereiche unterteilt werden und dass die Daten von Bildbereichen der zweiten Kamera mit Daten von benachbarten Bildbereichen der ersten Kamera verglichen werden, wodurch für jeden dem Vergleich unterzogenen Bildbereich der zweiten Kamera eine Korrelationskurve erzeugt wird. Ist die erste Kamera wiederum die linke Kamera und die zweite Kamera wiederum die rechte Kamera, so wird bei dem vorliegend beschriebenen Verfahren eine "Rechts-Links-Korrelation" beschrieben. Diese kann statt einer "Links-Rechts-Korrelation" durchgeführt werden oder zusätzlich zu dieser. Führt man beide Korrelationen durch, so kann durch eine vergleichende Auswertung beider Mengen von Korrelationskurven die Qualität eines dreidimensionalen Bildes deutlich verbessert werden. Diese vergleichende Auswertung wird bevorzugt ebenfalls in flexibler Weise von der zweiten Datenverarbeitungseinrichtung, das heißt vorzugsweise von dem Controller, vorgenommen.

Weiterhin ist das erfindungsgemäße System bevorzugt so ausgebildet, dass das Auswerten der von der ersten Datenverarbeitungseinrichtung erzeugten Korrelationskurve durch die zweite Datenverarbeitungseinrichtung das Erzeugen dreidimensionaler Bilder umfasst. Die Auswertung eines solchen dreidimensionalen Bildes beziehungsweise solcher dreidimensionaler Bilder kann verschiedene Vorgänge in einem Kraftfahrzeug anzeigen, auslösen oder beeinflussen.

Ebenfalls ist es besonders bevorzugt, dass auf der Grundlage der Auswertung der Korrelationskurven eine Klassifizierung einer Sitzbelegung in einem Kraftfahrzeug erfolgt. Dies ist insbesondere im Hinblick auf das Zündverhalten des Beifahrer-Airbags sinnvoll.

Ebenfalls kann es nützlich sein, dass auf der Grundlage der Auswertung der Korrelationskurven ein Fahrer beim Steuern eines Kraftfahrzeugs unterstützt wird. Dabei können Funktionen wie Spurerkennung, Unfallvorbeugung, Stop and Go, etc. unterstützt werden.

Die Erfindung baut auf dem gattungsgemäßen Verfahren dadurch auf, dass die Funktionen der ersten Datenverarbeitungseinrichtung das Erzeugen von Korrelationskurven als weiterzuverarbeitende Daten umfassen und dass die Funktionen der zweiten Datenverarbeitungseinrichtung das Auswerten der von der ersten Datenverarbeitungseinrichtung erzeugten Korrelationskurven umfassen. Auf diese Weise werden die Eigenschaften und Vorteile des erfindungsgemäßen Systems auch im Rahmen eines Verfahrens realisiert. Dies gilt auch für die nachfolgend beschriebenen bevorzugten Ausführungsformen des erfindungsgemäßen Verfahrens.

Das Verfahren ist in besonders vorteilhafter Weise dadurch weitergebildet, dass die Funktionen der ersten Datenverarbeitungseinrichtung ein Vorverarbeiten der Bilddaten zu vorverarbeiteten Daten umfassen und dass aus den vorverarbeiteten Daten Korrelationskurven erzeugt werden.

Ebenfalls ist in vorteilhafter Weise vorgesehen, dass die erste Datenverarbeitungseinrichtung Daten von zwei Kameras empfängt, welche zusammen eine Stereokamera bilden, dass die Daten jeder Kamera in mehrere Bildbereiche unterteilt werden und dass die Daten von Bildbereichen der ersten Kamera mit Daten von benachbarten Bildbereichen der zweiten Kamera verglichen werden, wodurch für jeden dem Vergleich unterzogenen Bildbereich der ersten Kamera eine Korrelationskurve erzeugt wird.

Ebenfalls ist es im Rahmen des erfindungsgemäßen Verfahrens in vorteilhafter Weise möglich, dass die erste Datenverarbeitungseinrichtung Daten von zwei Kameras empfängt, welche zusammen eine Stereokamera bilden, dass die Daten jeder Kamera in mehrere Bildbereiche unterteilt werden und dass die Daten von Bildbereichen der zweiten Kamera mit Daten von benachbarten Bildbereichen der ersten Kamera verglichen werden, wodurch für jeden dem Vergleich unterzogenen Bildbereich der zweiten Kamera eine Korrelationskurve erzeugt wird.

Weiterhin ist das erfindungsgemäße Verfahren bevorzugt so ausgebildet, dass das Auswerten der von der ersten Datenverarbeitungseinrichtung erzeugten Korrelationskurve durch die zweite Datenverarbeitungseinrichtung das Erzeugen dreidimensionaler Bilder umfasst.

Ebenfalls ist es bei dem Verfahren bevorzugt, dass auf der Grundlage der Auswertung der Korrelationskurven eine Klassifizierung einer Sitzbelegung in einem Kraftfahrzeug erfolgt.

Weiterhin kann das Verfahren dadurch nützlich sein, dass auf der Grundlage der Auswertung der Korrelationskurven ein Fahrer beim Steuern eines Kraftfahrzeugs unterstützt wird.

Der Erfindung liegt die Erkenntnis zugrunde, dass durch das Trennen rechenzeitaufwendiger Algorithmen und weniger rechenzeitaufwendiger Algorithmen zur Durchführung mit unterschiedlichen Datenverarbeitungseinrichtungen erhebliche Vorteile erzielt werden können. Bei Systemen des Standes der Technik wurde der gesamte Bilderzeugungsalgorithmus bislang entweder komplett in einem Controller oder komplett in einem ASIC beziehungsweise FPGA durchgeführt. Auf der Grundlage der Erfindung werden nun rechenzeitaufwendige Algorithmen, bezüglich derer keine Flexibilität zur Verfügung gestellt werden muss, durch Hardware im ASIC beziehungsweise FPGA realisiert. Weniger rechenzeitaufwendige Algorithmen, die zudem in vorteilhafter Weise flexibel gestaltet sein sollten, werden von einem Controller durchgeführt.

Die Erfindung wird nun mit Bezug auf die begleitenden Zeichnungen anhand bevorzugter Ausführungsformen beispielhaft erläutert.

Es zeigen:
- Figur 1: ein schematisches Blockdiagramm eines erfindungsgemäßen Systems; und
- Figur 2: ein Flussdiagramm zur Erläuterung eines erfindungsgemäßen Verfahrens.

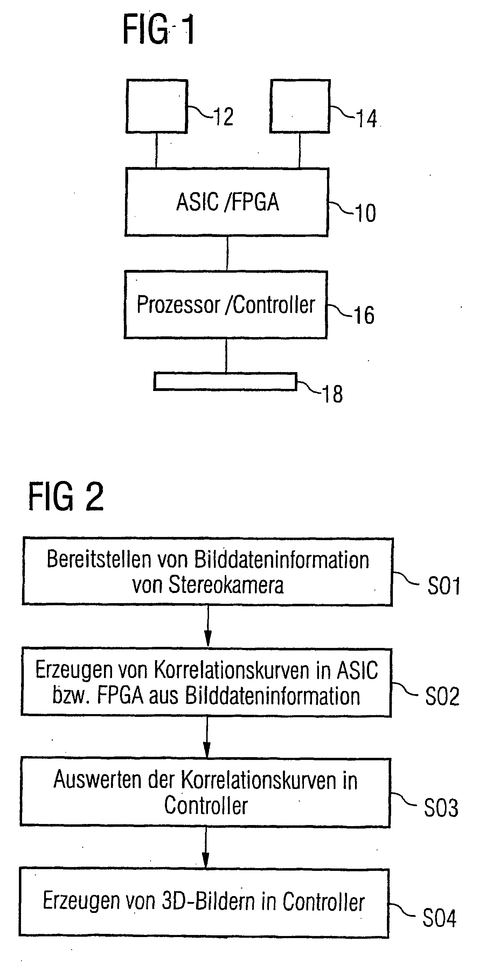

Figur 1 zeigt ein schematisches Blockdiagramm eines erfindungsgemäßen Systems. Es sind zwei Kameras 12, 14 beziehungsweise Kameraeinrichtungen vorgesehen, die zur Datenkommunikation mit einer ersten Datenverarbeitungseinrichtung 10 in Verbindung stehen. Die erste Datenverarbeitungseinrichtung 10 steht zur weiteren Kommunikation mit einer zweiten Datenverarbeitungseinrichtung 16 in Verbindung, welche 16 beispielsweise mit einem CAN-Bus 18 eines Kraftfahrzeugs kommunizieren kann.

Das System ist also in zwei Datenverarbeitungseinrichtungen 10, 16 aufgeteilt, wobei die jeweiligen Verarbeitungsfunktionen den Datenverarbeitungseinrichtungen 10, 16 entsprechend dem mit der Verarbeitung in Verbindung stehenden Rechenaufwand zugewiesen sind. In der Datenverarbeitungseinrichtung 10, die in der Lage ist, wesentlich höhere Verarbeitungsgeschwindigkeiten als die Datenverarbeitungseinrichtung 16 zur Verfügung zu stellen, werden demzufolge rechenzeitaufwendige Algorithmen verarbeitet, während in der Datenverarbeitungseinrichtung 16 die weniger rechenzeitaufwendigen Algorithmen durchgeführt werden. Besonders wird weiterhin darauf geachtet, dass in der Datenverarbeitungseinrichtung 10 solche Algorithmen durchgeführt werden, die in der Regel nicht flexibel an bestimmte Anwendungen angepasst werden müssen, während in der Datenverarbeitungseinrichtung 16 solche Algorithmen durchgeführt werden, bei denen unter Umständen sehr viele Parameter an Anwendungen optimal angepasst werden müssen. Auf diese Weise werden auf der Grundlage des erfindungsgemäßen Systems zwei Probleme gleichzeitig gelöst. Zum einen erhält man eine hohe Verarbeitungsgeschwindigkeit, da aufwendige Algorithmen in der "schnellen" Datenverarbeitungseinrichtung 10 durchgeführt werden, welche auf einer Hardwareimplementierung beruht. Im Gegensatz hierzu werden weniger rechenzeitaufwendige Algorithmen in der "langsamen" Datenverarbeitungseinrichtung 16 durchgeführt, wobei hier allerdings eine hohe Flexibilität aufgrund der Softwareimplementierung gegeben ist.

Die ersten Datenverarbeitungseinrichtung 10 ist dabei in besonders vorteilhafter Weise als ASIC beziehungsweise als FPGA ausgebildet. Ein ASIC kann im Hinblick auf die rechenzeitaufwendige Berechnung der Korrelationskurven optimiert werden, so dass extrem hohe Verarbeitungsgeschwindigkeiten erreicht werden können. Es ist nicht erforderlich, für jeweils unterschiedliche Anwendungen unterschiedliche ASICs zu entwerfen, da die flexible Anpassung nachfolgend durch die zweite Datenverarbeitungseinrichtung 16 übernommen wird.

Aus vergleichbaren Gründen ist es von besonderem Vorteil, dass die erste Datenverarbeitungseinrichtung 10 ein FPGA ist. Auch das Umprogrammieren eines FPGAs ist aufwendig. Indem der FPGA aber ausschließlich der Berechnung der Korrelationskurven gewidmet wird, ist ein solches Umprogrammieren nicht mehr erforderlich, wenn unterschiedliche Anwendungen gewünscht werden. Gleichzeitig wird eine hohe Verarbeitungsgeschwindigkeit aufgrund der Realisierung durch einen FPGA erreicht.

In diesem Zusammenhang ist es besonders vorteilhaft, dass die zweite Datenverarbeitungseinrichtung 16 als Prozessor beziehungsweise Controller ausgelegt ist. Es ist also möglich, die Flexibilität des Gesamtsystems dadurch zur Verfügung zu stellen, dass beispielsweise ein beliebig umprogrammierbarer Controller als zweite Datenverarbeitungseinrichtung 16 verwendet wird. Die Rechengeschwindigkeit eines solchen Controllers ist ausreichend, um die Korrelationskurven auszuwerten, beispielsweise Extremwerte der Korrelationskurven zu bestimmen oder unterschiedliche Sätze von Korrelationskurven miteinander zu vergleichen.

Konkret werden von der Datenverarbeitungseinrichtung 10 zunächst die von den Kameras 12, 14 die zusammen eine Stereokamera 12, 14 bilden, gelieferten Bilddaten vorverarbeitet, wobei zum Beispiel rechenzeitaufwendige Censustransformationen durchgeführt werden. Anschließend folgt in der Datenverarbeitungseinrichtung 10 die Korrelation der Bilddaten der jeweiligen Kameras. Dies kann beispielsweise so erfolgen, dass jeder Bildbereich des Bildes der linken Kamera 12 mit mehreren, beispielsweise 24 direkt benachbart liegenden Bildbereichen des Bildes der rechten Kamera 14 verglichen wird. Jeder einzelne Vergleich liefert einen Wert, der die Übereinstimmung der entsprechenden Ergebnisse charakterisiert. Für jeden Bereich des linken Bildes ergeben sich folglich mehrere, beispielsweise 24 Vergleichsergebnisse. Diese Abfolge von Vergleichsergebnissen wird Korrelationskurve beziehungsweise Korrelationsfunktion genannt. Für jeden Bildbereich des linken Bildes ergibt sich also eine Korrelationskurve. Das so durchgeführte Verfahren wird als "Links-Rechts-Korrelation" bezeichnet. Ebenfalls ist es in entsprechender Weise möglich, eine "Rechts-Links-Korrelation" durchzuführen. Dies kann zusätzlich oder statt der "Links-Rechts-Korrelation" erfolgen.

In der zweiten Datenverarbeitungseinrichtung 16 werden dann Extremwerte der Korrelationskurven bestimmt. Beim Vorliegen mehrerer Sätze von Korrelationskurven, beispielsweise "Links-Rechts-Korrelation" und "Rechts-Links-Korrelation", kann durch Vergleich der Sätze die Qualität eines von der Datenverarbeitungseinrichtung 16 erzeugten dreidimensionalen Bildes deutlich verbessert werden.

Figur 2 zeigt ein Flussdiagramm, zur Erläuterung eines erfindungsgemäßen Verfahrens.

In Schritt S01 werden Bilddateninformationen von einer Stereokamera bereitgestellt.

Diese werden in Schritt S02 zur Erzeugung von Korrelationskurven in einem ASIC beziehungsweise einem FPGA weiterverarbeitet.

In Schritt S03 werden die Korrelationskurven ausgewertet, wobei diese Auswertung als nicht sonderlich rechenzeitaufwendig in dem Controller vorgenommen wird.

In Schritt S04 werden dreidimensionale Bilder in dem Controller erzeugt.

Nachfolgend kann eine Übergabe dieser Bilder beziehungsweise von Informationen, die den Bildern entnommen worden sind, über den CAN-Bus des Fahrzeugs (CAN-Bus 18, siehe Figur 1) beispielsweise an eine zentrale Steuereinheit des Kraftfahrzeugs weitergegeben werden.

Sie eignet sich insbesondere zur Klassifizierung einer Sitzbelegung in einem Kraftfahrzeug und/oder zur Unterstützung eines Fahrers beim Steuern seines Kraftfahrzeuges.

## Patentansprüche

1. System zum Verarbeiten von Bilddaten mit
- einer ersten Datenverarbeitungseinrichtung (10) zum Verarbeiten von Bilddaten von mindestens zwei Kameras (12, 14), wobei weiterzuverarbeitende Daten erzeugt werden, und
- einer zweiten Datenverarbeitungseinrichtung (16) zum Weiterverarbeiten der weiterzuverarbeitenden Daten, wobei
- die Funktionen der ersten Datenverarbeitungseinrichtung (10) im Wesentlichen auf speziell für die Funktionen konfigurierter Hardware basieren, und
- die Funktionen der zweiten Datenverarbeitungseinrichtung (16) im Wesentlichen auf speziell für die Funktionen konfigurierter Software basieren,
**dadurch gekennzeichnet,**
- **dass** die Funktionen der ersten Datenverarbeitungseinrichtung (10) das Erzeugen von Korrelationskurven als weiterzuverarbeitende Daten umfassen und
- **dass** die Funktionen der zweiten Datenverarbeitungseinrichtung (16) das Auswerten der von der ersten Datenverarbeitungseinrichtung (10) erzeugten Korrelationskurven umfassen.

2. System nach Anspruch 1,
**dadurch gekennzeichnet,**
- **dass** die Funktionen der ersten Datenverarbeitungseinrichtung (10) ein Vorverarbeiten der Bilddaten zu vorverarbeiteten Daten umfassen und
- **dass** aus den vorverarbeiteten Daten Korrelationskurven erzeugt werden.

3. System nach Anspruch 1 oder 2,
**dadurch gekennzeichnet,**
- **dass** die erste Datenverarbeitungseinrichtung (10) Daten von zwei Kameras (12, 14) empfängt, welche zusammen eine Stereokamera bilden,
- **dass** die Daten jeder Kamera (12, 14) in mehrere Bildbereiche unterteilt werden und
- **dass** die Daten von Bildbereichen der ersten Kamera (12) mit Daten von benachbarten Bildbereichen der zweiten Kamera (14) verglichen werden, wodurch für jeden dem Vergleich unterzogenen Bildbereich der ersten Kamera (12) eine Korrelationskurve erzeugt wird.

4. System nach einem der vorhergehenden Ansprüche,
**dadurch gekennzeichnet,**
- **dass** die erste Datenverarbeitungseinrichtung (10) Daten von zwei Kameras (12, 14) empfängt, welche zusammen eine Stereokamera bilden,
- **dass** die Daten jeder Kamera (12, 14) in mehrere Bildbereiche unterteilt werden und
- **dass** die Daten von Bildbereichen der zweiten Kamera (14) mit Daten von benachbarten Bildbereichen der ersten Kamera (12) verglichen werden, wodurch für jeden dem Vergleich unterzogenen Bildbereich der zweiten Kamera (14) eine Korrelationskurve erzeugt wird.

5. System nach einem der vorhergehenden Ansprüche, **dadurch gekennzeichnet, dass** das Auswerten der von der ersten Datenverarbeitungseinrichtung (10) erzeugten Korrelationskurve durch die zweite Datenverarbeitungseinrichtung (12) das Erzeugen dreidimensionaler Bilder umfasst.

6. System nach einem der vorhergehenden Ansprüche, **dadurch gekennzeichnet, dass** auf der Grundlage der Auswertung der Korrelationskurven eine Klassifizierung einer Sitzbelegung in einem Kraftfahrzeug erfolgt.

7. System nach einem der vorhergehenden Ansprüche, **dadurch gekennzeichnet, dass** auf der Grundlage der Auswertung der Korrelationskurven ein Fahrer beim Steuern eines Kraftfahrzeugs unterstützt wird.

8. Verfahren zum Verarbeiten von Bilddaten, bei dem
- mit einer ersten Datenverarbeitungseinrichtung (10) Bilddaten von mindestens zwei Kameras (12, 14) verarbeitet werden, wobei weiterzuverarbeitende Daten erzeugt werden, und
- mit einer zweiten Datenverarbeitungseinrichtung (16) die weiterzuverarbeitenden Daten weiterverarbeitet werden, wobei
- die Funktionen der ersten Datenverarbeitungseinrichtung (10) im Wesentlichen auf speziell für die Funktionen konfigurierter Hardware basieren, und
- die Funktionen der zweiten Datenverarbeitungseinrichtung (16) im Wesentliche auf speziell für die Funktionen konfigurierter Software basieren,
**dadurch gekennzeichnet,**
- **dass** die Funktionen der ersten Datenverarbeitungseinrichtung (10) das Erzeugen von Korrelationskurven als weiterzuverarbeitende Daten umfassen, und
- **dass** die Funktionen der zweiten Datenverarbeitungseinrichtung (16) das Auswerten der von der ersten Datenverarbeitungseinrichtung (10) erzeugten Korrelationskurven umfassen.

9. Verfahren nach Anspruch 8,
**dadurch gekennzeichnet,**
- **dass** die Funktionen der ersten Datenverarbeitungseinrichtung (10) ein Vorverarbeiten der Bilddaten zu vorverarbeiteten Daten umfassen und
- **dass** aus den vorverarbeiteten Daten Korrelationskurven erzeugt werden.

10. Verfahren nach Anspruch 8 oder 9,
**dadurch gekennzeichnet,**
- **dass** die erste Datenverarbeitungseinrichtung (10) Daten von zwei Kameras (12, 14) empfängt, welche zusammen eine Stereokamera bilden,
- **dass** die Daten jeder Kamera (12, 14) in mehrere Bildbereiche unterteilt werden und
- **dass** die Daten von Bildbereichen der ersten Kamera (12) mit Daten von benachbarten Bildbereichen der zweiten Kamera (14) verglichen werden, wodurch für jeden dem Vergleich unterzogenen Bildbereich der ersten Kamera (12) eine Korrelationskurve erzeugt wird.

11. Verfahren nach einem der Ansprüche 8 bis 10,
**dadurch gekennzeichnet,**
- **dass** die erste Datenverarbeitungseinrichtung (10) Daten von zwei Kameras (12, 14) empfängt, welche zusammen eine Stereokamera bilden,
- **dass** die Daten jeder Kamera (12, 14) in mehrere Bildbereiche unterteilt werden und
- **dass** die Daten von Bildbereichen der zweiten Kamera (14) mit Daten von benachbarten Bildbereichen der ersten Kamera (12) verglichen werden, wodurch für jeden dem Vergleich unterzogenen Bildbereich der zweiten Kamera (14) eine Korrelationskurve erzeugt wird.

12. Verfahren nach einem der Ansprüche 8 bis 11,
**dadurch gekennzeichnet, dass** das Auswerten der von der ersten Datenverarbeitungseinrichtung (10) erzeugten Korrelationskurve durch die zweite Datenverarbeitungseinrichtung (16) das Erzeugen dreidimensionaler Bilder umfasst.

13. Verfahren nach einem der Ansprüche 8 bis 12,
**dadurch gekennzeichnet, dass** auf der Grundlage der Auswertung der Korrelationskurve eine Klassifizierung einer Sitzbelegung in einem Kraftfahrzeug erfolgt.

14. Verfahren nach einem der Ansprüche 8 bis 13,
**dadurch gekennzeichnet, dass** auf der Grundlage der Auswertung der Korrelationskurven ein Fahrer beim Steuern eines Kraftfahrzeugs unterstützt wird.

## Claims

1. A system for processing image data comprising
- a first data processing device (10) for processing image data from at least two cameras (12, 14), while generating data to be further processed, and
- a second data processing device (16) for further processing the data to be further processed, wherein
- the functions of the first data processing device (10) are substantially based on hardware that is specifically configured for said functions, and
- the functions of the second data processing device (16) are substantially based on software that is specifically configured for said functions,
**characterised in that**
- the functions of the first data processing device (10) comprise the generating of correlation curves as data to be further processed
- the functions of the second data processing device (16) comprise the analysing of the correlation curves generated by the first data processing device (10).

2. A system according to Claim 1,
**characterised in that**
- the functions of the first data processing device (10) comprise preprocessing of image data into preprocessed data and
- correlation curves are generated from the preprocessed data.

3. A method according to Claim 1 or Claim 2,
**characterised in that**
- the first data processing device (10) receives data from two cameras (12, 14), which together form a stereo camera,
- the data of each camera (12, 14) is subdivided into multiple image areas and
- the data of image areas of the first camera (12) is compared with data of adjacent image areas of the second camera (14), by means of which comparison a correlation curve is generated for each image area of the first camera (12) subjected to the comparison.

4. A system according to any one of the preceding Claims,
**characterised in that**
- the first data processing device (10) receives data from two cameras (12, 14), which together form a stereo camera,
- the data of each camera (12, 14) is subdivided into multiple image areas and
- the data of image areas of the second camera (14) is compared with data of adjacent image areas of the first camera (12), by means of which comparison a correlation curve is generated for each image area of the second camera (14) subjected to the comparison.

5. A system according to one of the preceding Claims,
**characterised in that**
the analysing by the second data processing device (12) of the correlation curve generated by the first data processing device (10) comprises the generating of three-dimensional images.

6. A system according to one of the preceding Claims,
**characterised in that**
on the basis of the analysis of the correlation curves, a classification is made of a seat occupancy in a motor vehicle.

7. A system according to one of the preceding Claims,
**characterised in that**
on the basis of the analysis of the correlation curves, a driver is assisted in controlling a motor vehicle.

8. A method for processing image data in which
- with a first data processing device (10) image data from at least two cameras (12, 14) is processed, whereby data to be further processed is generated, and
- with a second data processing device (16) the data to be further processed is further processed, whereby
- the functions of the first data processing device (10) are substantially based on hardware that is specifically configured for said functions, and
- the functions of the second data processing device (16) are substantially based on software that is specifically configured for said functions,
**characterised in that**
- the functions of the first data processing device (10) comprise the generating of correlation curves as data to be further processed, and
- the functions of the second data processing device (16) comprise the analysing of correlation curves generated by the first data processing device (10).

9. A method according to Claim 8,
**characterised in that**
- the functions of the first data processing device (10) comprise a preprocessing of image data into preprocessed data and
- correlation curves are generated from the preprocessed data.

10. A method according to Claim 8 or Claim 9,
**characterised in that**
- the first data processing device (10) receives data from two cameras (12,14), which together form a stereo camera,
- the data of each camera (12, 14) is divided into multiple image areas and
- the data of image areas of the first camera (12) is compared with data of adjacent image areas of the second camera (14), by means of which comparison a correlation curve is generated for each image area of the first camera (12) subjected to the comparison.

11. A method according to one of Claims 8 to 10,
**characterised in that**
- the first data processing device (10) receives data from two cameras (12, 14), which together form a stereo camera,
- the data of each camera (12, 14) is subdivided into multiple image areas and
- the data of image areas of the second camera (14) is compared with data of adjacent image areas of the first camera (12), by means of which comparison a correlation curve is generated for each image area of the second camera (14) subjected to the comparison.

12. A method according to one of Claims 8 to 11,
**characterised in that**
the analysing by the second data processing device (16) of the correlation curve generated by the first data processing device (10) comprises the generating of three-dimensional images.

13. A method according to one of Claims 8 to 12,
**characterised in that**
on the basis of the analysis of the correlation curve a classification is made of a seat occupancy in a motor vehicle.

14. A method according to one of Claims 8 to 13,
**characterised in that**
on the basis of the analysis of the correlation curves a driver is assisted in controlling a motor vehicle.

## Revendications

1. Système permettant de traiter des données d'images comportant
- un premier dispositif de traitement de données (10) permettant de traiter des données d'images d'au moins deux caméras (12, 14), générant ainsi des données destinées à être traitées ultérieurement, et
- un deuxième dispositif de traitement de données (16) permettant de traiter les données destinées à être traitées ultérieurement,
- les fonctions du premier dispositif de traitement de données (10) étant basées essentiellement sur un matériel configuré spécialement pour lesdites fonctions, et
- les fonctions du deuxième dispositif de traitement de données (16) étant basées essentiellement sur un logiciel configuré spécialement pour lesdites fonctions,
**caractérisé en ce que**
- les fonctions du premier dispositif de traitement de données (10) comprennent la génération de courbes de corrélation en tant que données destinées à être traitées ultérieurement et
- les fonctions du deuxième dispositif de traitement de données (16) comprennent l'interprétation des courbes de corrélation générées par le premier dispositif de traitement de données (10).

2. Système selon la revendication 1,
**caractérisé en ce que**
- les fonctions du premier dispositif de traitement de données (10) comprennent un prétraitement des données d'images en vue d'obtenir des données prétraitées et
- à partir des données prétraitées sont générées des courbes de corrélation.

3. Système selon la revendication 1 ou 2,
**caractérisé en ce que**
- le premier dispositif de traitement de données (10) reçoit des données provenant de deux caméras (12, 14) qui forment, à elles deux, une caméra stéréo,
- les données de chaque caméra (12, 14) sont subdivisées en plusieurs zones d'image et
- les données correspondant à des zones d'image provenant de la première caméra (12) sont comparées à des données correspondant à des zones d'image voisines provenant de la deuxième caméra (14), ce qui permet de générer une courbe de corrélation pour chaque zone d'image de la première caméra (12) ayant fait l'objet d'une telle comparaison.

4. Système selon l'une des revendications précédentes,
**caractérisé en ce que**
- le premier dispositif de traitement de données (10) reçoit des données provenant de deux caméras (12, 14) qui forment, à elles deux, une caméra stéréo,
- les données de chaque caméra (12, 14) sont subdivisées en plusieurs zones d'image et
- les données de zones d'image provenant de la deuxième caméra (14) sont comparées aux données de zones d'image voisines provenant de la première caméra (12), ce qui permet de générer une courbe de corrélation pour chaque zone d'image de la deuxième caméra (14) ayant fait l'objet d'une telle comparaison.

5. Système selon l'une des revendications précédentes,
**caractérisé en ce que** l'interprétation, réalisée par le deuxième dispositif de traitement de données (12), de la courbe de corrélation générée par le premier dispositif de traitement de données (10) comprend la génération d'images tridimensionnelles.

6. Système selon l'une des revendications précédentes,
**caractérisé en ce qu'** un classement d'une occupation des sièges dans un véhicule automobile s'effectue sur la base de l'interprétation des courbes de corrélation.

7. Système selon l'une des revendications précédentes,
**caractérisé en ce que** l'interprétation des courbes de corrélation forme la base sur laquelle un conducteur est assisté dans la conduite d'un véhicule automobile.

8. Procédé permettant de traiter des données d'images, dans lequel
- un premier dispositif de traitement de données (10) traite des données d'images provenant d'au moins deux caméras (12, 14), générant ainsi des données destinées à être traitées ultérieurement, et
- un deuxième dispositif de traitement de données (16) traite lesdites données destinées à être traitées ultérieurement,
- les fonctions du premier dispositif de traitement de données (10) étant basées essentiellement sur un matériel configuré spécialement pour lesdites fonctions, et
- les fonctions du deuxième dispositif de traitement de données (16) étant basées essentiellement sur un logiciel configuré spécialement pour lesdites fonctions,
**caractérisé en ce que**
- les fonctions du premier dispositif de traitement de données (10) comprennent la génération de courbes de corrélation en tant que données destinées à être traitées ultérieurement et
- les fonctions du deuxième dispositif de traitement de données (16) comprennent l'interprétation des courbes de corrélation générées par le premier dispositif de traitement de données (10).

9. Procédé selon la revendication 8,
**caractérisé en ce que**
- les fonctions du premier dispositif de traitement de données (10) comprennent un prétraitement des données d'images en vue d'obtenir des données prétraitées et
- à partir des données prétraitées sont générées des courbes de corrélation.

10. Procédé selon la revendication 8 ou 9,
**caractérisé en ce que**
- le premier dispositif de traitement de données (10) reçoit des données provenant de deux caméras (12, 14) qui forment, à elles deux, une caméra stéréo,
- les données provenant de chaque caméra (12, 14) sont subdivisées en plusieurs zones d'image, et
- les données de zones d'image provenant de la première caméra (12) sont comparées à des données de zones d'image voisines provenant de la deuxième caméra (14), ce qui permet de générer une courbe de corrélation pour chaque zone d'image de la première caméra (12) ayant fait l'objet d'une telle comparaison.

11. Procédé selon l'une des revendications 8 à 10,
**caractérisé en ce que**
- le premier dispositif de traitement de données (10) reçoit des données provenant de deux caméras (12, 14) qui forment, à elles deux, une caméra stéréo,
- les données provenant de chaque caméra (12, 14) sont subdivisées en plusieurs zones d'image, et
- les données de zones d'image provenant de la deuxième caméra (14) sont comparées à des données de zones d'image voisines provenant de la première caméra (12), ce qui permet de générer une courbe de corrélation pour chaque zone d'image de la deuxième caméra (14) ayant fait l'objet d'une telle comparaison.

12. Procédé selon l'une des revendications 8 à 11,
**caractérisé en ce que** l'interprétation, réalisée par le deuxième dispositif de traitement de données (16), de la courbe de corrélation générée par le premier dispositif de traitement de données (10) comprend la génération d'images tridimensionnelles.

13. Procédé selon l'une des revendications 8 à 12,
**caractérisé en ce qu'** un classement d'une occupation des sièges dans un véhicule automobile s'effectue sur la base de l'interprétation de la courbe de corrélation.

14. Procédé selon l'une des revendications 8 à 13,
**caractérisé en ce que** l'interprétation des courbes de corrélation forme la base sur laquelle un conducteur est assisté dans la conduite d'un véhicule automobile.
